(19) Europäisches Patentamt
European Patent Office
Office européen des brevets

(11) **EP 3 648 425 B1**

(12) **EUROPEAN PATENT SPECIFICATION**

(45) Date of publication and mention
of the grant of the patent:
**10.01.2024 Bulletin 2024/02**

(21) Application number: **18204350.5**

(22) Date of filing: **05.11.2018**

(51) International Patent Classification (IPC):
**H04L 67/12** *(2022.01)*     **H04L 25/49** *(2006.01)*

(52) Cooperative Patent Classification (CPC):
**H04L 67/12; H04L 25/4902**

(54) **ARRANGEMENT FOR PROCESSING SENSOR DATA**

ANORDNUNG ZUR VERARBEITUNG VON SENSORDATEN

AGENCEMENT POUR LE TRAITEMENT DE DONNÉES DE CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.05.2020 Bulletin 2020/19**

(73) Proprietor: **Robert Bosch GmbH
70442 Stuttgart (DE)**

(72) Inventors:
• **Hein, Maximilian
58511 Luedenscheid (DE)**
• **Lara Hernandez, Alejandro Antonio
78399 San Luis Potosi (MX)**
• **Vazquez Langle Nieto, Pablo
70075 Toluca State of Mexico (MX)**

(74) Representative: **RDL Patentanwälte PartG mbB
Senefelderstrasse 26
70176 Stuttgart (DE)**

(56) References cited:
**US-A1- 2017 249 202     US-A1- 2017 292 898**

• **Teledyne Lecroy: "Teledyne LeCroy Decoding a
SENT Protocol Signal Title page | 1 of 5 Decoding
a SENT Protocol Signal APPLICATION BRIEF", ,
21 March 2013 (2013-03-21), pages 1-5,
XP055849562, Retrieved from the Internet:
URL:http://cdn.teledynelecroy.com/files/ap
pnotes/decoding_a_sent_protocol_signal_tit
le.pdf [retrieved on 2021-10-08]**

## Description

The invention provides for a Real-Time SENT Translator (RTST) and a method for monitoring a sensor using an RTST.

Background Art

A sensor is a device for detecting events or changes in its environment and sending the information to other electronics. In motor vehicles, sensors are employed for sensing various physical quantities, which are sent to one, or more electronic control unit, which in turn evaluates the quantities for controlling the operation of components of the motor vehicle and the overall function of the motor vehicle.

In order to transmit the sensor data detected by the sensor to the assigned electronic control unit, several communication protocols can be used. A communication protocol is a defined set of rules and regulations that determine how data is transmitted in telecommunications and computer networking.

The SENT (Single Edge Nibble Transmission) protocol is a point-to-point scheme for transmitting signal values from a sensor to a controller and is typically used in the automotive field. Particularly, the SENT protocol is suitable for transmitting high-resolution sensor data to an electronic control unit (ECU) quickly. The SENT protocol encodes the information sent using the length of voltage pulses. Furthermore, said protocol is an alternative system to the already known CAN protocol (CAN: Controller Area Network) and the use of PWM signals (PWM: Pulse Width Modulation) often used in the automotive industry.

As many sensors have changed from analogue outputs to the new digital SENT communication protocol recently, old test benches and old motor vehicles will become obsolete. Therefore, a robust solution capable of real-time operation serving as an interface between the digital outputs of the new sensors and the old analogue inputs of the motronic as well as storing and analyzing the digital data of the SENT protocol is requested. For this purpose, an interface between the electronic control unit and the SENT sensors is required.

There are already devices that can send the SENT data via USB to a central processing unit (CPU) and simultaneously map to an analogue signal. However, previous devices cannot adapt independently to various SENT configurations without beeing configured by an external operator. Furthermore, these devices do not use a scalable Ethernet communication, USB is standard, the problem of USB is, that it is not reliable, especially not if a USB hub is used with many devices connected, and do not use an FPGA (Field Programmable Gate Array) so that parallel processing of several signals cannot be realized.

Document US 2017/249202 A1 describes a runtime monitor suitable for monitoring a runtime system which can comprise one or more sensors. The runtime monitor includes one or more components to monitor the runtime system and to detect requirement violations during a runtime operation of the runtime system.

Document US 2017/292898 A1 describesnan electronic control unit for controlling the operation of an internal combustion engine. The control unit comprises a first semiconductor chip with first circuitry, a second semiconductor chip with secon circuitry, a digital real time communication link connecting the first circuitry and the second cirduitry.

Document Teledyne Lecroy: "Teledyne LeCroy Decoding a SENT Protocol Signal Title, page 1 to 5 Decoding a SENT Protocol Signal APPLICATION BRIEF describes a configurable SENT Decoder for decoding an d displaying signals.

Disclosure of the invention

According to the invention, a Real-Time SENT Translator (RTST) according to claim 1 is introduced for processing digital sensor data encoded according to the SENT protocol, the RTST is designed to decode the encoded digital sensor data and is implemented in an FPGA (Field Programmable Gate Array).

Furthermore, a method according to claim 9 is introduced for monitoring at least one sensor using an arrangement as described herein.

The arrangement provided can be denoted as Real-Time SENT Translator (RTST) and can be used in the automotive field. This RTST is suitable for decoding the data of arbitrary SENT configurations in a robust manner and in real-time. Furthermore, the RTST can send the collected data via Ethernet and analogue outputs with a minimum delay and adapts itself to various SENT configurations.

The RTST decodes the information encoded into the SENT format according to the J2716 official SENT documentation: "The data is transmitted as a series of pulses with data encoded as falling to falling edge periods. Details of the signal encoding may vary for specific sensor applications".

The data are encoded to messages. Each message consists of a calibration pulse, a serial message pulse, several data pulses, a checksum pulse and eventually a pause pulse.

Message = [calibration | serial message | data 1 | … | data n | checksum | pause]

Important data, like an angle of a plate or a position of a pedal can be encoded into a single message by using the data pulses, whereas information with less importance, like the name of the OEM, is encoded into a specific, consecutive series of serial message pulses.

The RTST is able to measure and save the different pulse lengths. It uses the calibration pulse to scale the rest of the pulses to a range called Nibble Values, defined by J2716. It interprets the Nibble Values to get the data, what is possible after a whole message. It interprets a series of serial message pulses to get its data as well and checks the received pulses and data for plausibility. To do so it needs to check the checksum and to check other tests that need to be performed as well. It does all of this according to the official documentation. Furthermore, it saves the data to registers, which can be read by the Microblaze using the AXI interface and sends the data as well to the digital analogue converter (DAC).

The whole RTST is a large finite state machine with some configuration parameters.

Particularly, the RTST is implemented in an FPGA that is an integrated circuit designed to be configured by a customer or a designer after manufacturing, i.e. it is field programmable. The FPGA configuration is generally specified applying a hardware description language (HDL). FPGAs contain an array of programmable logic blocks and a hierarchy of reconfigurable interconnects that allow the blocks to be wired together like many logic gates that can be interconnected in different configurations. In most FPGAs, logic blocks also include memory elements. FPGAs process signals intrinsically parallel and can be optimized in regard to special arithmetic operations. In comparison to an ASIC (Application Specific Integrated Circuit), an FPGA is more cost-efficient and can be utilized more flexible.

HDL (Hardware Description Languages) are specialized computer languages used to describe the structure and the behaviour of electronic circuits.

In one embodiment, the arrangement is suitable for adaption to various SENT configuration.

Details of the signal encoding may vary for specific sensor applications. However, it is possible to detect this variations, since there is a finite set of possible configurations. In more detail, a brief description of how you can get the parameters to configure the RSTS automatically is given:
Different transmitter clock speeds can be detected by searching for the calibration pulse. To do so a lot of pulses need to be saved and afterwards be analyzed. The calibration pulse differs clearly from the other possible pulse lengths.

Afterwards, the system knows how fast the transmitter clock is and at the same time how much pulses a message consists of. This knowledge can be used to determine how the typically fast data is encoded.

Also important is to get access to the information of the serial message pulses. There are different possible manners to encode data into this format. However, the number of possibilities is small, so it is possible to figure out the correct configuration by a trial & error approach using a finite state machine.

The serial message consists of the last important information that is needed to set the parameters of the RTST.

The whole calibration process will be finished after a few seconds.

Brief description of the drawings

Figure 1 shows schematically an RTST according to the invention together with the parallel inputs and outputs.

Figure 2 shows internal components of the RTST.

It will be understood that the features mentioned above and those described hereinafter can be used not only in the combination specified but also in other combinations or on their own, without departing from the scope of the invention.

The invention is diagrammatically illustrated in the drawings by means of embodiments by way of example, and is hereinafter explained in detail with reference to the drawings. It is understood that the description is in no way limiting on the scope of the present invention and is nearly an illustration of embodiments of the invention.

Description of embodiments

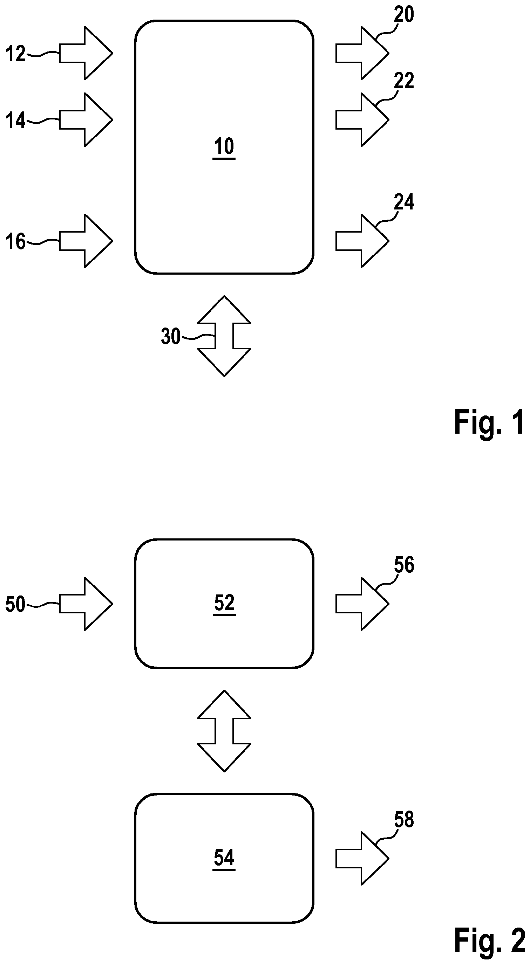

Figure 1 shows an embodiment of an arrangement for processing sensor data overall denoted with reference number 10 and hereinafter also denoted as RTST (Real-Time SENT Translator). RTST 10 is implemented within an FPGA. Inputs of the RTST 10 are sensor data signals SENT 1 12, SENT 2 14 and SENT n 16 representing the digital sensor data. SENT 1 12 to SENT n 16 can be different SENT input signals and are mapped each to one of the Analogue 1 to Analogue n output signals. Outputs of the RTST 10 are Analogue 1 20, Analogue 2 22 and Analogue n 24. Furthermore, a bidirectional interface 30 is provided for connecting the RTST 10 to Ethernet.

Figure 1 illustrates the operation of the RTST 10. Multiple SENT signals can be connected to miscellaneous GPIO pins of an FPGA (GPIO: General Purpose Input/Output). The programmable logic of the FPGA decodes the digital messages in real-time. The decoding finishes approximately 15 μs after receiving a SENT message, that is 10 to 100 faster than speed of the SENT protocol that requires about 1 ms per message.

Due to parallel processing of the FPGA, it is possible to process a great number of SENT signals simultaneously. The logic of the FPGA detects connecting of new SENT signals and, furthermore, is able to automatically adapt to the configuration, e.g. number of pulses per message and transmitter frequency, of the used SENT signals by detecting a few messages.

As new messages are decoded, they can be mapped to an analogue signal in real-time with help of a digital analogue converter what is needed for a control loop for example. Also, the data can be transmitted via Ethernet whenever a digital further prosecution is required. Ethernet offers the possibility to transmit data of multiple SENT sensors in a sufficiently fast and reliable manner. Furthermore, the RTST can be configured via Ethernet, if required.

Figure 2 shows internal components of the RTST. A SENT sensor data signal 50 is input in a block 52 for decoding implemented in HDL. The first block 52 is connected to a second block 54 comprising a complete Ethernet stack in C running on Microblaze Software.

Microblaze is a soft microprocessor. A soft microprocessor is a microprocessor core that is fully implemented using logic synthesis. That means that the whole logic of such a device is mapped to hardware registers and logical operations performed on those register.

An FPGA is a typical device where you can perform such logic synthesis. It is similar to a 32-bit RISC microprocessor. Together with other hardware "simulated" by this manner, like an Ethernet controller or memory, you can build up a whole microcontroller system on an FPGA.

Output of the first block 52 is an analogue signal 56. Output of the second block 54 is an Ethernet signal 58.

Accordingly, decoding is completely implemented in HDL. Ethernet protocol stack runs on the same microprocessor simulated by the FPGA. The two models communicate via an AXI interface.

AXI interconnect is the primary I/O bus used to connect the Microblaze to other hardware modules. It connects one or more AXI memory-mapped Master devices to one or more memory-mapped Slave devices. The slaves are hardware modules also implemented by logic synthesis on the FPGA. You can define the logic of the RTST itself as such hardware module, since it is written in HDL.

The arrangement according to the invention has, at least in some of the embodiments, a number of advantages:

- Fast feedback: particularly important for control loops.

- Flexibility: enables a simple translation of various SENT configurations to different outputs, Analogue and Ethernet.

- Robustness: important for use in motor vehicles and continuous operation test benches.

- Real-time: important for use in motor vehicles and continuous operation test benches.

- Scalability: space-saving in vehicles and machines as only one RTST is needed.

Fast feedback of the decoded data is essential to avoid an additional delay in the control loop. Flexibility achieved by automatic adaption to various SENT configurations is important to integrate the RTST in motor vehicles without the need for profound previous knowledge. Real-time capability and robustness of the RTST are decisive when utilizing it in motor vehicles and continuous operation test benches in a reliable manner. Scalability as a result of parallel processing of multiple SENT signals is important to save space within motor vehicles and machines.

Installation of an RTST allows for continued use of older test benches for testing new sensors. Thus, it is not necessary to acquire additional machines saving money. Moreover, the Ethernet connection can be utilized to continue processing digitally and to compile statistics for test runs.

Furthermore, RTST can be used to collect interesting data including error messages of the connected SENT signals and can analyze a SENT message in real-time to monitor invalid messages and especially why they are invalid. This can be interesting for improving the SENT transmitter. Fast feedback of the RTST after having received a complete SENT message and sending the information via Ethernet enables a time-critical analysis of the SENT signals in real-time.

**Claims**

1. Real-Time SENT, Single Edge Nibble Transmission, Translator, RTST, for decoding the data of arbitrary SENT configurations in real time and for processing digital sensor data encoded according to the SENT protocol, the RTST (10)

   - is designed to decode the encoded digital sensor data,
   **characterized in that** the RTST (10)
   - is implemented in a Field Programmable Gate Array, FPGA, containing an array of programmable logic blocks and a hierarchy of reconfigurable interconnects.

2. RTST according to claim 1, the RTST (10) is adapted for parallel processing of multiple sensor data signals (12, 14, 16, 50) representing the digital sensor data.

3. RTST according to claim 1 or 2, further comprising a memory for storing encoded and/or decoded sensor data.

4. RTST according to one of claims 1 to 3, further comprising a digital analogue converter for converting decoded digital sensor data.

5. RTST according to one of claims 1 to 4, further comprising a bidirectional Ethernet interface (30).

6. RTST according to one of claims 1 to 5, adapted for use in a test bench.

7. RTST according to one of claims 1 to 6, adapted for use in a motor vehicle.

8. RTST according to one of claims 1 to 7, suitable for adaption to various SENT configuration.

9. Method for monitoring at least one sensor using an Real-Time SENT, Single Edge Nibble Transmission, Translator, RTST (10) according to one of claims 1 to 8.

**Patentansprüche**

1. Echtzeit SENT (Single Edge Nibble Transmission) Translator, RTST, zum Dekodieren der Daten beliebiger SENT-Konfigurationen in Echtzeit und zum Verarbeiten digitaler Sensordaten, die gemäß dem SENT-Protokoll kodiert wurden, wobei der RTST (10)

   - konzipiert ist, um die kodierten digitalen Sensordaten zu dekodieren,
   **dadurch gekennzeichnet, dass** der RTST (10)
   - in einem Field Programmable Gate Array, FPGA, implementiert ist, welches eine Reihe programmierbarer Logikblöcke enthält
   und eine Hierarchie rekonfigurierbarer Verbindungen.

2. RTST nach Anspruch 1, wobei der RTST (10) zur parallelen Verarbeitung mehrerer Sensordatensignale (12, 14, 16, 50), die die digitalen Sensordaten darstellen, angepasst ist.

3. RTST nach Anspruch 1 oder 2, weiterhin umfassend einen Speicher zum Speichern kodierter und/oder dekodierter Sensordaten.

4. RTST nach einem der Ansprüche 1 bis 3, weiterhin umfassend einen Digital-/Analogwandler zum Umwandeln dekodierter digitaler Sensordaten.

5. RTST nach einem der Ansprüche 1 bis 4, weiterhin umfassend eine bidirektionale Ethernet-Schnittstelle (30).

6. RTST nach einem der Ansprüche 1 bis 5, angepasst für die Verwendung in einem Prüfstand.

7. RTST nach einem der Ansprüche 1 bis 6, angepasst für die Verwendung in einem Kraftfahrzeug.

**8.** RTST nach einem der Ansprüche 1 bis 7, geeignet für die Anpassung an verschiedene SENT-Konfigurationen.

**9.** Verfahren zur Überwachung mindestens eines Sensors unter Verwendung eines Echtzeit SENT (Single Edge Nibble Transmission) Translators, RTST (10), nach einem der Ansprüche 1 bis 8.

**Revendications**

**1.** Traducteur en temps réel SENT, Single Edge Nibble Transmission (« transmission de grignotage à simple front »), RTST, pour décoder en temps réel les données des configurations SENT arbitraires et pour traiter les données de capteur numérique codées selon le protocole SENT, le RTST (10)

- étant conçu pour décoder les données de capteur numérique codées,
**caractérisé en ce que** le RTST (10)
- est mis en œuvre dans une matrice prédiffusée programmable par l'utilisateur, FPGA, contenant une matrice de blocs de logique programmable
et une hiérarchie d'interconnexions reconfigurables.

**2.** RTST selon la revendication 1, le RTST (10) étant adapté pour le traitement parallèle de multiples signaux de données de capteur (12, 14, 16, 50) représentant les données de capteur numérique.

**3.** RTST selon la revendication 1 ou 2, comprenant en outre une mémoire pour mémoriser les données de capteur codées et/ou décodées.

**4.** RTST selon l'une des revendications 1 à 3, comprenant en outre un convertisseur numérique-analogique pour convertir les données de capteur numérique codées.

**5.** RTST selon l'une des revendications 1 à 4, comprenant en outre une interface Ethernet bidirectionnelle (30).

**6.** RTST selon l'une des revendications 1 à 5, adapté pour être utilisé dans un banc d'essai.

**7.** RTST selon l'une des revendications 1 à 6, adapté pour être utilisé dans un véhicule motorisé.

**8.** RTST selon l'une des revendications 1 à 7, approprié pour être adapté aux diverses configurations SENT.

**9.** Procédé pour suivre au moins un capteur à l'aide d'un traducteur en temps réel SENT (Single Edge Nibble Transmission), RTST (10), selon l'une des revendications 1 à 10.

12 →

14 →

16 →

**10**

→ 20

→ 22

→ 24

30 ⟷

**Fig. 1**

50 →

**52**

→ 56

⟷

**54**

→ 58

**Fig. 2**

**EP 3 648 425 B1**

**REFERENCES CITED IN THE DESCRIPTION**

**Patent documents cited in the description**

- US 2017249202 A1
- US 2017292898 A1